# EUROPEAN PATENT APPLICATION

(11) **EP 1 739 600 A1**
(43) Date of publication of application: **03.01.2007**
(21) Application number: 04736754.5
(22) Date of filing: 14.06.2004
(51) Int. Cl.: G06K 19/08

(54) **CD/DVD DIGITAL CARD COMPRISING A CONTACTLESS MICROCOMPUTER CHIP FOR TRANSPORT SYSTEMS**

(30) Priority: 05.01.2004 WO PCT/ES2004/000001
(71) Applicant: Hurbilitzen Contactless, S.L., E-20870 Elgoibar Gipuzkoa (ES)
(72) Inventor: OSORO LOYOLA, Joseba Txomin, E-20870 Elgoibar Gipuzkoa (ES)
(74) Representative: Urizar Anasagasti, José Antonio
(86) International application number: PCT/ES2004/000272
(87) International publication number: WO 2005/066891

(57) **Abstract**

A digital card 1 equipped with a CD or DVD bearing a contactless microcomputer chip 2 for the transmission of data relating to the use of transport systems, such as Calypso, Icare and other new-generation systems, between a specific terminal and the microcomputer chip 2. Other security devices have been added to the digital card 1 such that it can be used as a personal identification means. The CD or DVD 3 of the card can contain data relating to transport systems and/or personal identification and/or act as a support for other types of advertising or informative data, etc. The components of the digital card 1 are mounted to a credit card - or similar- type support 4.

## Description

### Object of the Invention

The invention relates to a digital card which is equipped with a CD or DVD bearing a contactless microcomputer chip for the transmission of data relating to the use of transport systems, such as Calypso, lcare and other new-generation systems, between a specific terminal and the microcomputer chip. According to the invention, other security devices have been added to the digital card such that it can be used as a personal identification means, The CD or DVD of the card can contain data relating to transport systems and/or personal identification and/or act as a support for other types of advertising or informative data, etc.

The object of the invention is accomplished by a digital card as claimed on claim 1.

### Background of the Invention

Nowadays contacless and magnetic technology is used in public and private transportation by means of tickets with magnetic strips, chips and readers/canceling of these tickets. On the other hand it is also common to use magnetic cards as support. We also have the magnetic strip card with contact and /or contacless 125 Hz proximity chip for monetary and access purposes.

In general, the cost reductions obtained with the contactless technology are very significant compare with actual magnetic technology. In fact, comparing the magnetic terminals having a plurality of mobile mechanical components, of about 100, with their absent in the contacless terminals, the investment costs are divided by two and the maintenance costs are divided by a factor from 5 to 10.

On the other hand, the magnetic strip tickets have very limited information storage capacity due to its technology and the information being easily corruptible. The 125 MHz magnetic strip cards with contact or contactless proximity chip for access or monetary purposes, don't have the massive information storage capacity required by some actual multimedia applications.

For the reasons stated above, the joined application of the contacless Mifare chip in accordance to the ISO 14443 A/B norms and other ISO norms like 15693 and the CD/DVD digital card forming the digital card of the invention, provides the perfect means for the incentive and stimulation of public transportation, since it can overcome the inconvenience of actual technology.

Otherwise the digital card optimizes the promotion costs:
1. The mutual authentication between the microcomputers of the cards and the terminals guarantees a decentralize security structure. Therefore, it is not necessary to systematically acquire a central server authorization.
2. The selection of contactless microprocessor cards allows the expansion at a reduce cost of the terminal networks in which a deposit transaction can be performed.
3. The characteristics of the multi-service digital cards allow sharing of the costs between different borrowers.

### Brief Description of the Drawings

The following detailed description may be better understood by referencing the accompanying figures in which:
Fig. 1 shows a CD/DVD digital card;
Fig. 2 shows the microcomputer chip and the antenna for contacless communication.
Fig. 3 shows the four substrates or layers comprising the CD/DVD digital card.

### Detailed Description

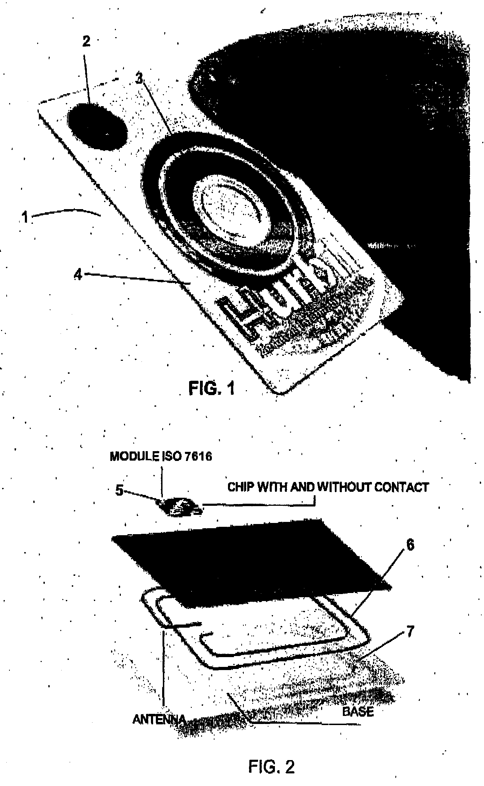

Regarding figures 1, 2 and 3, the digital card 1 comprises a support in which two storage technologies converge, one with process possibilities, reading and recording, supported by the memory of a microprocessor 2, and the other for reading and writing only supported by a CD-ROM or DVD-ROM 3, with another contactless chip 5 and antenna 6 proximity communication technology, obtaining by this combination an instrument to optimize information about public and private transportation services and to make the information relating to these services available to the consumer. The invention has the advantage that even the support of the digital card 4 will be more economic than others available in the market since the digital format can provide many advertising and marketing options as well as trusted customer cards systems, such as the use of Modeus system, MasterCard's Pay Pass and others.

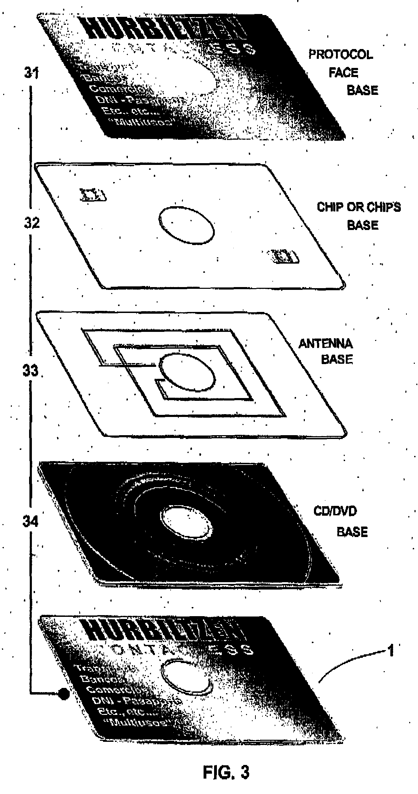

The digital card 1 has a support 4 supporting a CD or DVD 3 readable by any standard reader and a microcomputer chip 2 with contact and contactless communication. Figure 2 shows the elements of the microcomputer chip 2: a base 7, an antenna 6 for communication in the desired frequency and said antenna also feeds said microcomputer 5 which is a chip with and without contact according to the ISO 7616 standard. Figure 3 shows the four layers or bases composing the digital card CD/DVD 1, said bases or layers are: protocol face base 31, chip or chips base 32, antenna base 33 and CD/DVD base 34.

The digital card 1 may have many different forms and capacities. The digital card 1 can be the typical CD card of 30, 35, 40, 50, 100 Mb or a DVD card with different storage and format capacities. The digital card 1 can also be a USB card in its different categories. This is a digital support in its different ways, i.e., CD-ROM, CD-RW, etc.

The CD cards are CD-ROMs having the size and appearance of a business or credit card compatibles with any CD-ROM or DVD reader in the market. The CD cards represent an excellent support for the inclusion of all kind of information with the multimedia advantages: video, music, animations, text and completely interactive.

The usual capacity of a CD card is 30 to 50 Mb, having enough space to enter direct information about public transportation services schedules, advertising, city guides, etc; direct access to web pages through which clients could have access to updated information, and as in the case of nextbus.com, the clients could access pages having routes and arrival times of the transportation services and information regarding public transportation routes and schedules in real time thanks to GPS and GIS systems.

The digital card includes a contactless chip, that may be or proximity only or combined with a magnetic strip or with a contact chip or with other security devices (Wiegand System, barium ferrite, scratchers).

To manufacture the preferred embodiment of this invention to be used in public transportation in systems such as Calypso, lcare, and others, a contactless chip is used of the Mifare type, meeting ISO 7816 and ISO 14443 A/B standards used by Philips, Hid and other manufacturers in their semiconductor chips.

The open structure of Philips Semiconductors' Mifare system and others, allows other systems such as MasterCard's Pay Pass, to be easily added to this digital support, which will eventually be expanded to include other transportation systems, including railway systems, high velocity trains, urban buses, highway tolls, automatic billing systems in public places, conventional and electronic commerce and other applications.

Contacless technology is based on inductive transmission, which is used in the communication between a smart digital card and a terminal. The smart digital card stores the information; the terminal (scanner, register) reads or modifies the information. The inductive transmission offers various advantages:
a. Perfect distance control transmission
b. Optimum transaction speed
c. The card does not needs connections
d. Ergonomic comfort
e. Reliability (does not use any mechanical components)
f. Less expensive than microwave and infrared technologies
g. Possibilities for more applications

The insertion of the microcomputer chip 2 in the digital support can be done in a variety of ways. The microcomputer chip 2 can be inserted anywhere without obstructing the optical reading of the digital support; it can also come out of the rectangular digital card 1 or of any of the different shapes that the digital card 1 may have in order to facilitate the insertion of the contactless chip 2. The insertion can be made by laser, printing, lamination, die, injection or stamping.

The CD/DVD digital card 1 is entirely compatible with all the relevant operation standards and technologies; this guarantees its integration in any kind of environment Between these standards and technologies are included:
1. ISO 14443- defines the radio signal and protocol for high frequency inductive transmission at 13.56 MHz.
2. ISO 7816-4 - defines data organization and the card's basic commands.
3. CEN 1546- defines the electronic purse (data and protocols).
4. CEN 1545- defines the transport data codification.
5. ENV 50166-2 - matter relative to human exposition to electromagnetic radiation (10 Kilocycles at 300 GHz).
6. I-CODE- More advance technology for smart labels having a thin paper with a programmable integrated circuit having a connected antenna and communicating in the 13.56 MHz band.
7. HITAG - same as the previous technology but in the 125 KHz band, with reading and writing.
8. EM MARI - same as the previous technology but read only.

The digital card microcomputer 5 comprises various actives zones, in particular the software or "mask". Thanks to this evolutionary and modifiable software the microcomputer may obtains all is flexibility. The software is compatible and interoperable with the systems and software that follow European rule CEN 1545 relative to transport data and interoperation specifications (DOFOCO, IOPTA).

The terminal application development is facilitated by a high level command game (IPA: Interface Program Application), a secure structure using diversify keys, signed data and the Des, Desx, triple algorithms Del Des, that may be adapted to the different functions characteristics required on each moment and to desire applications.

The microcomputers 2 of the digital cards 1 of the terminal's cryptographic modules put into practice proven solutions like car-terminal mutual authentication, transactions certifications, DES algorithms, which particularly permits distantly reloading the digital card 1 under completely safety conditions. The mutual authentication between the microcomputer 2 and the terminals guarantees a decentralize security structure. Therefore, it is not necessary to systematically obtain a central server authorization.

Due to the safety, speed and versatility offered by the digital card 1 with contactless chip technology 5, we can say we are talking about "future money" base technology, since different technologies may be conjugated with respect to safety devices (finger print, biometrics controls, iris control,...), access control and money charging devices, reaching a support that conglomerates individual identity and its money availability under optimum safety conditions.

This digital card 1 will begin to arrive to the people through and for public transportation, but it will reach the entire society once many applications are added to it such as:
a. Entries and payments in concentrated public and privates infrastructures like highways, roads, theatres, movie theatres, football or sports stadiums, entertainments events, parking places, libraries, public services, hotel industry, hotels and vending machines.
b. Use to perform registration processes in any kind of academic institutions, sports,
c. Big commercial facilities, trusted customer systems of the Travel Clubs-type.
d. As an information and communication card between the citizen and the institutions, sanitation systems, tourism and transportation.
e. As an intemet transactions assurance card in which as well as being able to make financial institution transactions, commerce, public entities, etc. will give cause for all types of forums and webs.

The inherent benefits of the digital card 1 of the present invention are, among others:
a. Fights against payment evasion
b. Productivity increase
c. Diversify commercial nets (internet charges, mobile telephones, etc.).
d. New services.

## Claims

1. A CD/DVD digital card with a contacless microcomputer chip (1) characterize by a base (4), generally having a credit card or similar shape, incorporating at least a microcomputer (2) formed by a contact and contacless chip (5) in accordance with ISO 7616 standard and by an antenna (6) for communication with specific terminals; and a CD or DVD (3) readable by any CD/DVD reader available in the market and because it applies to the public and private transportation systems for use authorization and payment by the specific terminals capable of communicating with the digital card (1).

2. A CD/DVD digital card with contacless microcomputer chip according to claim 1, wherein the CD or DVD (3) has a capacity value between 30 and 100 Mb and preferably between 30 and 50 Mb and containing data related to said transportation systems readable with any commercial reader which facilitates its use by a card carrier.

3. A CD/DVD digital card with contacless microcomputer chip according to claim 1, wherein at least one microcomputer (2) from the digital card (1) and a cryptographic module microcomputer from said specific terminal put into practice proven solutions like card-terminal mutual authentication, transaction certification, DES algorithms, which permit to recharge the digital card (1) at a distance under complete secure conditions and because mutual authentication in between at least a microcomputer (2) and the cryptographic module microcomputer from said specific terminals guarantees a safe decentralize structure for which is unnecessary to systematically obtain a central server authorization.

4. A CO/DVD digital card according to claim 1, wherein to this base (4) other safety devices may be added such as, magnetic strip, bar codes, Wiegand, scratchers, fingerprint digitalization, iris profile recording and information encrypting systems, obtaining an identity card or passport having access control and cash payment capability by a security transfer.

## Amended claims

### Amended claims under Art. 19.1 PCT

1. A CD/DVD digital card having a contacless microcomputer chip (1) comprising a base (4), generally having a credit or business card shape; a microcomputer (2) formed by a contactless chip (5) according to the ISO 7616 standard incorporated over the base (4); an antenna (6) for communication with specific terminals incorporated over the base (4); and a CD/DVD (3) incorporated over the base (4), legible and recordable by a standard reader/CD/DVD recorder, wherein the contactless chip (5) has a modifiable software and an open structure that allows the addition of new applications to the existing cards with the advantage that the users will not have to change them.

2. The CD/DVD digital card with contactless microcomputer chip (1) according to claim 1, wherein said card (1) is applied to public and private transportation systems for payment and use authorization by said specific terminals capable to communicate with the digital card (1) and wherein the CD/DVD has data relative to said transportation systems legible in any standard reader.

3. The CD/DVD digital card with contactless microcomputer chip (1) according to claim 1, wherein the microcomputer (2) of said digital cards (1) and a cryptographic module microcomputer of said specific terminals, put to practice proven solutions for card-terminal mutual authentication, certification of the transactions and DES algorithm, that allow read/record the chip (5) of the digital card (1) at a distance in a complete secure environment and because the mutual authentication between the microcomputer (2) and the cryptographic module microcomputer of said specific terminals guarantees a decentralize security structure that makes unnecessary to systematically resort to an authorization given by a central server.

4. The CD/DVD digital card according to claim 1, wherein optionally there are other security devices of the magnetic strip-type, bar codes, Wiegand systems and scratchers added to the base (4).

5. The CD/DVD digital card according to claim 1, wherein a microcomputer chip in mounted over the base (4) without additional contact.
